# EUROPEAN PATENT SPECIFICATION

(11) **EP 4 242 860 B1**
(45) Date of publication and mention of the grant of the patent: **25.12.2024**
(21) Application number: 23160209.5
(22) Date of filing: 06.03.2023
(51) Int. Cl.: G06F 13/42

(54) **A DEVICE FOR DECODING THE DATA COMMUNICATION UNDER UNIVERSAL SERIAL BUS STANDARD**
VORRICHTUNG ZUR DEKODIERUNG DER DATENÜBERTRAGUNG UNTER UNIVERSELLER SERIELLER BUSNORM
DISPOSITIF DE DÉCODAGE DE COMMUNICATION DE DONNÉES SELON UNE NORME DE BUS SÉRIE UNIVERSEL

(30) Priority: 10.03.2022 CN 202210252656
(43) Date of publication of application: 13.09.2023
(73) Proprietor: NXP USA, Inc., Austin TX 78735 (US)
(72) Inventor: Liu, Hao, 5656AG Eindhoven (NL); Wu, Jinhui, 5656AG Eindhoven (NL); Liang, Ping, 5656AG Eindhoven (NL); Jiang, Wenwei, 5656AG Eindhoven (NL)
(74) Representative: Miles, John Richard

(56) References cited:
- US-A1- 2003 018 839
- US-A1- 2010 275 037
- "Universal Serial Bus Specification REVISION 2.0", vol. REVISION 2.0, 27 April 2000 (2000-04-27), pages 1 - 650, XP008147911, Retrieved from the Internet <URL:http://www.usb.org/developers/docs/usb_20_052510.zip>
- XIAOPING BAI ET AL: "Fault-tolerant design and testing of USB2.0 peripheral devices IP core system", TSINGHUA SCIENCE AND TECHNOLOGY, TSINGHUA UNIVERSITY PRESS, BEIJING, CN, vol. 12, no. S1, 31 July 2007 (2007-07-31), pages 197 - 201, XP011375064, ISSN: 1007-0214, DOI: 10.1109/TST.2007.6074050

## Description

### BACKGROUND

The present application is generally directed to communication system, and more particularly to a device for decoding the data communication under universal serial bus standard.

Universal Serial Bus (USB) is a standard of an interface, which has been developed for enhancing the expandability of a peripheral device (USB device/function device) connected to a USB host such as a personal computer. USB is a serial interface standard which allows communications between a host device and various USB-compliant devices to be performed via a common bus line.

USB 1.X defines two modes having different data transfer rates, i.e. low-speed mode (LS) of 1.5 Mbps and full-speed mode (FS) of 12 Mbps. The LS and FS mode may also be used in the standard termed USB 2.0, USB 3.0, etc.

Under USB standard, in principle, one USB host device can be connected with up to 127 devices via a common bus line which includes USB data lines and power supply lines. In order to decode the data transmission on the USB data lines, usually a field programmable gate array (FPGA) or a microcontroller/microprocessor may be used to complete USB clock synchronization and USB signal analysis.

There remains a need for a system with low cost for decoding the data communication under universal serial bus standard.

US2003/018839 A1, US2010/275037 A1 and XP011375064 disclose USB data receiver performing NRZI decoding before bit unstuffing implemented on programmable hardware logic like ASICs or FPGAs or using state machines.

### SUMMARY

This summary is provided to introduce a selection of concepts in a simplified form that are further described below in the Detailed Description. The scope of protection is defined by the appended claims.

According to one aspect of the application, a device adapted to implement a state machine which defines a plurality of predetermined states and a plurality of predetermined events, for decoding USB data communicated over a universal serial bus (USB), the device comprising:
a pair of data input terminals for receiving the USB data, and a clock input terminal for receiving a system clock;
a clock processor coupled to the pair of data input terminals and the clock input terminal, and configured to output, based on the system clock, synchronized data and a device clock ;
an event generator coupled to the clock processor to receive the synchronized data and the device clock;
state logic circuitry coupled to an output of the event generator;
output terminals, coupled to the event generator and comprising a decoded-data output terminal and a clock output terminal; and
control circuity coupled to the event generator and for providing control information to the event generator;
wherein the state logic circuitry is configured to store a present state, being one of the predetermined states;
wherein the event generator is configured to trigger respective ones of the predetermined events, in response to respective combinations of values of the synchronized data, the device clock, the control information and the present state;
wherein:
   a one of the predetermined events comprises identifying a stuffed-bit in the synchronized data,
   another of the predetermined events comprises stripping the identified stuffed-bit from the synchronized data and not toggling output clock, to provide stuff-bit stripped synchronized data,
   a combination of the predetermined events comprises decoding the stuffed-bit stripped synchronized data, to provide decoded stuffed-bit stripped synchronized data,
   and a further of the predetermined events comprises outputting, at the output terminals, the decoded stuffed-bit stripped synchronized data and toggling the output clock.

In one or more embodiments, a clock rate of the device clock is at least 6 times the data transferring rate over the USB.

In one or more embodiments, a clock rate of the device clock is no more than 12 times of the data transferring rate over the USB.

In one or more embodiments, the device further comprises an indicator output terminal configured to output an indication signal indicative that the bus state of the USB is an end of package or not.

In one or more embodiments, the control circuity further comprises a counter unit (312) including first and second counters that are configurable to operate as a unified 32-bit counter or as two separate 16-bit counters.

In one or more embodiments, the control circuity further comprises a control logic circuitry connected to the counter unit to provide control signals for the counters of the counter unit, wherein the control logic circuitry is also connected to the event generator to receive event signals therefrom, and wherein the control logic circuit is configured to use the control signals to reset the counter after an event is triggered by the event generator.

In one or more embodiments, the control circuity further comprises a match register configured to load expected match value.

In one or more embodiments, the control circuity further comprises a match logic module configured to generate a match logic in response to the count values from the counter unit being equals to the match values from the match register, and wherein the one of the predetermined events is triggered only when the match logic is generated.

In one or more embodiments, the device further comprises an interrupt module connected to the event generator, wherein the interrupt module is configured to generate an interrupt signal in response to receiving a predetermined one of the event signals from the event generator.

### BRIEF DESCRIPTION OF THE DRAWINGS

The application as summarized above is further illustrated by the following embodiments and drawings. The drawings are for facilitating an understanding of the application and thus are not necessarily drawn to scale. Advantages of the subject matter claimed will become apparent to those skilled in the art upon reading this description in conjunction with the accompanying drawings, in which like reference numerals have been used to designate like elements, and in which:
FIG. 1 illustrates an example of a waveform of data encoding for USB transmission;
FIG. 2 illustrates a schematic block diagram of a system for decoding USB data communicated over a universal serial bus (USB) in accordance with an embodiment of the present application;
FIG. 3 highlights a device for decoding USB data communicated over a USB in accordance with an embodiment of the present application;
FIG. 4 illustrates a flow chart of the operation of a device for decoding the USB data in accordance with an embodiment of the present application;
FIG. 5A and FIG. 5B illustrates a low state machine part with an embodiment of the present application;
FIG. 6 illustrates a high state machine part in accordance with an embodiment of the present application;
FIG. 7 illustrates decoded stuffed-bit stripped synchronized data captured by using a logic analyzer.

### DETAILED DESCRIPTION

USB does not transmit data directly on the USB data lines. It converts the data into NRZI encoded data with Not-Return-to-Zero-Inverse (NRZI) encoding, and then the NRZI encoded data are transmitted on the USB data lines. Data capture by using a conventional low cost microcontroller may therefore be challenging. The NRZI data comprises J state and K state.

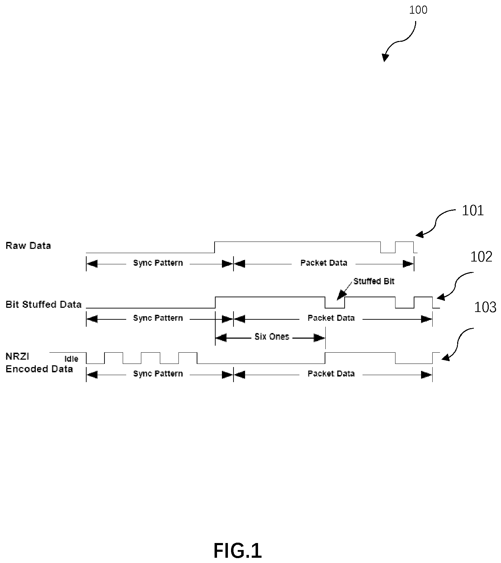

FIG. 1 illustrates an example of a data encoding for USB transmission, using bit-stuffing and subsequent NRZI encoding. In NRZI encoding, a "1" is represented by no change in level and a "0" is represented by a change in level. A string of "0" thus causes the NRZI data to toggle each bit time. "1"s may also be referred to as "one"s."0"s may also be referred to as "zero"s.

A string of raw data "1"s as shown throughout most of the "Packet-Data" interval in the upper waveform, at 101, may cause long periods with no transitions in the encoded data. In order to ensure adequate signal transitions, A "0" is inserted after every six consecutive "1", in the raw data, as shown by the middle waveform, at 102. This process is known as "bit stuffing" and the inserted "0" is known as a "stuffed-bit". The stuffed data packet is then converted to NRZI, with each "0" causing a data transition, and each "1" causing no transition, as shown by the lower waveform, at 103. One difficulty in decoding the data on the USB data lines is how to detect the stuffed-bit. In addition, in order to decode the USB data lines, it is also necessary to ensure clock synchronization.

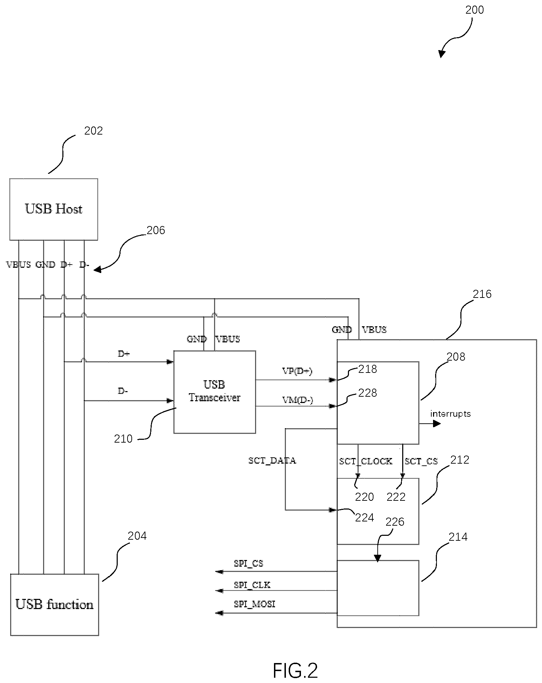

FIG. 2 is a schematic block diagram of a system 200 for decoding the data communication under universal serial bus (USB) standard. System 200 may comprise a USB host 202, a USB device 204 (also sometimes referred to as a "USB function", or "USB peripheral device"), USB data lines 206, a device 208, a USB transceiver 210, a co-processor 212, and a SPI interface 214. The USB device 204 may be coupled to the USB host 202 through USB cables. The USB includes two data lines D+/D- that carry data and two lines VBUS/GND that carry power. The supply voltage on the line VBUS may be +5V. The USB device 204 is configured to communicate data with the USB host 202 over data lines 206. In some embodiments, the USB device 204 may receive data from the USB host 202. In some other embodiments, the USB device 204 may transmit data to the USB host 202 based on the request of the USB host 202.

The system 200 uses bit stuffing and NRZI encoding system (not shown) in physical layer of the USB host 202 to encode the data for USB transmission. The system 200 may be used for LS and FS mode which may be used in the standard of USB 1.x, 2.0, 3.0 etc.

The device 208 may be coupled to one of the USB host 202 and the USB device 204. In some embodiments, the device 208 may be on the host side and coupled to the USB host 202 through cables. In some embodiments, the device 208 may be on the function side and coupled to the USB device 204 through cables. In some other embodiments, the device 208 may be located separately from the host side and the function side and coupled to one of the USB host 202 and the USB device 204 through cables.

The device 208 may be a peripheral which is adapted to implement a state machine with one 32 bit counter. In some embodiments, the device 208 is adapted to implement a state machine with two 16 bit counters. Each of the 16 bit counters may be used for some parts of the state machine. The state machine defines a plurality of predetermined states and a plurality of predetermined events, for decoding USB data communicated over a universal serial bus (USB). The device 208 is configured to receive the data over the USB data lines 206 and then synchronize the data, provide decoded stuffed-bit stripped synchronized data by using the predetermined states and events.

The device 208 comprises pair of data input terminals 218, 228 for receiving the USB encoded data with bit stuffing which is encoded from the raw data. Then the device 208 synchronizes the data and processes the synchronized data based on the predetermined events and states. The device 208 also comprises a clock input terminal (not shown) for receiving a system clock from a clock source. Then the device 208 identifies the stuffed-bits and decode synchronized data to raw data "1" and raw data "0". Some of the predetermined events comprise identifying a stuffed-bit in the synchronized data. Some of the predetermined events comprise stripping the identified stuffed-bit from synchronized data and not toggling output clock, to provide stuff-bit stripped synchronized data. A combination of the predetermined events comprises decoding the stuffed-bit stripped synchronized data, to provide decoded stuffed-bit stripped synchronized data, and a further of the predetermined events comprises outputting decoded stuffed-bit stripped synchronized data and toggling the output clock at the output terminals.

The USB data lines 206 include two data lines D+/D- that carry the encoded data. The synchronized data from each of the data lines D+ and D- have high level and low level. And there are rising edges from the low level to the high level and falling edges from the high level to the low level. The device 208 checks if the USB bus state is "end of package" (EOP) which means the synchronized data are not valid. If the USB bus state is not EOP, the synchronized data "1" means the state of the data on one of the data lines D+ and D- does not change, and the synchronized data "0" means the state of the data on the data lines D+ and D- changes. When the synchronized data from the D+ have one of the rising edge and the falling edge, the synchronized data from the D- have corresponding one of the falling edge and the rising edge. Then the device 208 may use one of the data lines D+ and D- to decode the synchronized data. The device 208 decodes the synchronized data "1" when the data on the data line D- and data line D+ does not have a rising edge or a falling edge. The device 208 decodes the synchronized data "0" when the data on the data lines D+ D- has one of the rising edge and the falling edge. The device 208 identifies a stuffed-bit when the synchronized data "0" is received after six synchronized data "1" received consecutively. The stuffed-bit will not be output by the device 208 and the output clock will not be toggled. The device 208 outputs the decoded stuffed-bit stripped synchronized data when the output clock is toggled.

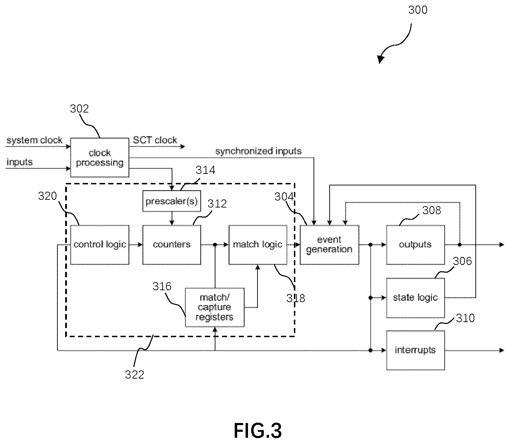

The details of the device 208 will be described below in combination of FIG. 3.

FIG. 3 shows, at block level, an embodiment of the device 208 adapted to implement a state machine which defines a plurality of predetermined states and a plurality of predetermined events, for decoding USB data communicated over a universal serial bus (USB). Referring to FIG. 3, the device 300 comprises a pair of data input terminals and a clock input terminal, a clock processor 302, an event generator 304, a state logic circuitry 306, output terminals 308, interrupts module 310, counter unit 312, prescaler 314, match register 316, match logic module 318 and control logic circuitry 320. The counter unit 312, prescaler 314, match register 316, match logic module 318 and control logic circuitry 320 are included in a control circuity 322 which is coupled to the event generator 304 and configured to provide control information to the event generator 304. Although the components of the device 300 are illustrated in Fig. 3 as being separate modules, these modules are typically integrated into one circuit.

The pair of data input terminals are used for receiving the USB data, and the clock input terminal is used for receiving a system clock. The clock processor 302 is coupled to the pair of data input terminals and the clock input terminal, and is configured to output synchronized data for the event generator 304 and a device clock (SCT clock) based on the system clock for various components of the device 300. The device also outputs a prescaler clock for the prescaler 314. The system clock may be generated by a clock generator. In some embodiments, the device clock and the prescaler clock are equivalent to the system clock. However, in other embodiment, one or both of the device clock and the prescaler clock may be differ from the system clock with respect to clock rate. The clock rate is also referred to as the clock frequency . For the full-speed mode (FS), the data transferring rate over the USB is typically 12Mbps. In some embodiments, the clock rate of the device clock is no more than 12 times of the data transferring rate over the USB. The clock rate of the device clock may be one of 72MHz, 96MHz, 120MHz and 144MHz. Then the clock rate of the system clock of device 300 may be 6times, 8times, 10times or 12 times of the data transferring rate. By this way, the device 300 may have enough time to decode the data package on the USB.

The prescaler 314 is configured to produce one or more clock signals for the counter unit 312 using the prescaler clock from the clock processor 302. The control logic circuitry 320 is configured to produce control signals to control at least one counter of the counter unit 312. The control signals determine when the counter is incremented, cleared and loaded. The control logic circuitry 320 includes an input to receive event signals generated by the event generator 304. The control logic circuitry is configured to provide corresponding control signals to the counter unit 312 in response to different event signals, i.e., when certain events are triggered. The control logic circuit 322 is configured to use the control signals to reset the counters of the counter unit 312 after an event is triggered by the event generator 304.

The counter unit 312 is configured to produce one or more running count values. As mentioned above, the counter unit includes one or more counters. In an embodiment, the counter unit 312 includes first and second counters that are configurable to operate as a unified 32-bit counter or as two separate 16-bit counters. In this embodiment, each counter of the counter unit 312 is connected to prescaler 314 to receive the device clock. Each counter is also connected to the control logic circuitry 320 to receive the control signals from the control logic circuitry 320. Thus, each counter maintains a count value using the device clock from the prescaler 314 and using the control signals from the control logic circuitry 320.

The match register 316 is configured to load expected match value. In some embodiments, the expected match value may be thirteen when the clock rate of the system clock of device 300 is 12 times of the data transferring rate, which means the USB data may be received at the time of the thirteenth clock cycle comes.

The match logic module 318 is configured to generate a match logic in response to the count values from the counter unit 312 being equal to the expected match values from the match register, and wherein the one of the predetermined events is triggered only when the match logic is generated. Thus, each data from the USB could be captured for every twelve counts when the clock rate of the system clock of device 300 is twelve times of the data transferring rate.

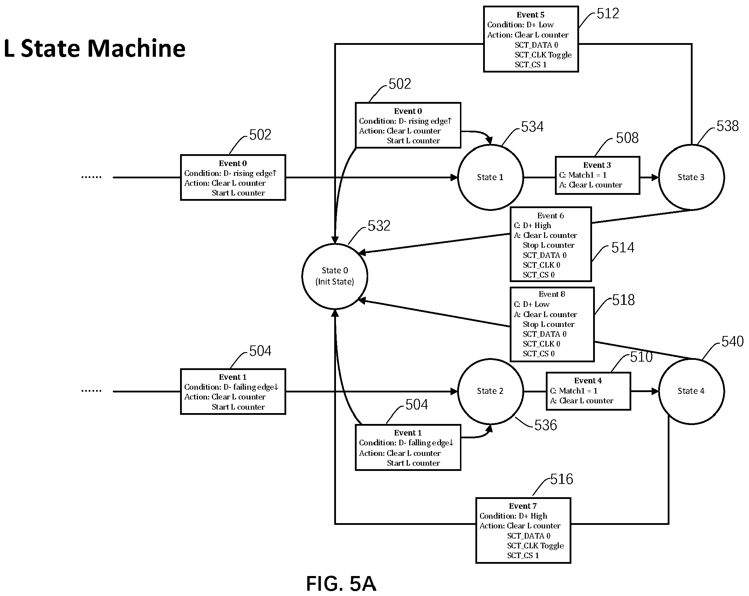

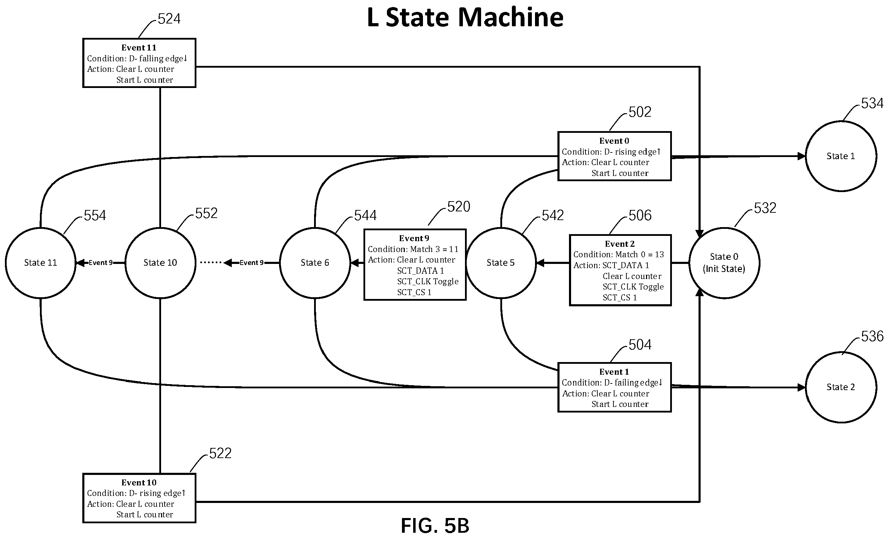

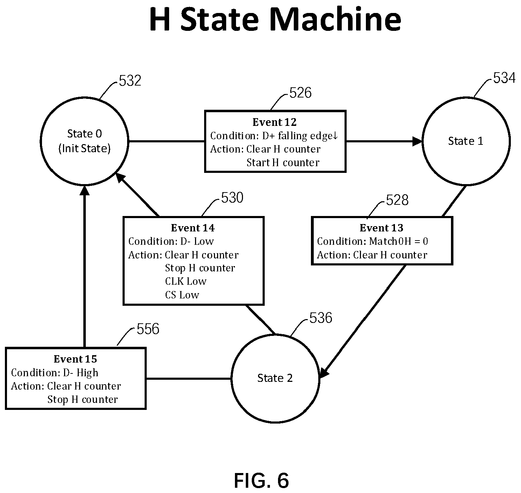

The event generator 304 is coupled to the clock processor 302 to receive the synchronized data and the device clock. The state logic circuitry 306 is coupled to an output of the event generator 304. The state logic circuitry 306 is configured to store a present state, being a one of the predetermined states. The output terminals 308 are coupled to the event generator 304 and comprise a decoded-data output terminal and a clock output terminal. The event generator 304 is configured to trigger respective ones of the predetermined events, in response to respective combinations of values of the synchronized data, the device clock, the control information and the present state. Referring to FIG. 5A, FIG. 5B and FIG. 6, a one of the predetermined events comprises identifying a stuffed-bit in the synchronized data. Another of the predetermined events comprises stripping the identified stuffed-bit from the synchronized data and not toggling output clock, to provide stuff-bit stripped synchronized data, such as data "1" and data "0". A combination of the predetermined events comprises decoding the stuffed-bit stripped synchronized data, to provide decoded stuffed-bit stripped synchronized data. And a further of the predetermined events comprises outputting, at the output terminals, the decoded stuffed-bit stripped synchronized data and toggling the output clock.

In some embodiments, the output terminals 308 are configured to output an indication signal indicative whether the bus state of the USB is an end of package (EOP) or not.

In some embodiments, an interrupt module 310 is configured to generate an interrupt signal in response to receiving a predetermined one of the event signals from the event generator.

Thus, present application uses a device adapted to implement a state machine with predetermined states and events to decode the data communication on the USB bus. The device may be implemented with a low cost MCU which may reduce the cost and may be easily integrated into other embedded products such as a secure bus monitor.

Referring back to FIG. 2, an apparatus 216 is used for decoding USB data communicated over the USB data lines. The apparatus 216 comprises the device 208 which is also shown as the device 300 in FIG. 3. In some embodiments, the apparatus may also comprise a co-processor 212 and a serial peripheral interface (SPI) interface 214.

The co-processor 212 comprises input terminals 220, 222, and 224 and at least one output 226 terminal. The input terminals 220, 222 of the co-processor 212 are coupled to the output terminals of the device 208 and configured to receive the output clock (at input terminal 220) and the decoded stuffed-bit stripped synchronized data (at input terminal 224) from the device 208. The co-processor 212 is configured to convert the decoded stuffed-bit stripped synchronized data and output clock into serial peripheral interface (SPI) signals. In some embodiments, In some embodiments, the device 208 also outputs an indication signal as shown by SCT_CS to the input 222 of the co-processor 212. The indication signal SCT_CS is used for indicating whether the bus state of the USB is an end of package (EOP) or not. Then the co-processor 212 is configured to convert the indication signal to a SPI indication signal as shown as SPI_CS. The co-processor 212 may transmit the SPI signals to the SPI interface 214 by internal bus. In embodiments which are implemented on or together with an ARM Cortex M architecture, the internal bus may include AHB bus and APB bridge. In some other embodiments, the co-processor 212 may convert the raw data signals in other ways to meet different requirement.

The serial peripheral interface (SPI) interface 214 is coupled to the output terminals 216 of the processor. The apparatus 216 may be configured to output the SPI indication signal (SPI_CS), SPI data signal (SPI_MOSI) and SPI clock signal (SPI_CLK) via the SPI interface 214.

In some embodiments, a USB transceiver 210 is coupled between the USB host 202 and the device 208 for improving the signal quality and signal integrity. The USB data lines D+ and D- carry analog data. The transceiver 210 is used to transfer the analog data to digital data. In some other embodiments, the device 208 may also receive the data from data lines directly without the transceiver 210 because the analog data from the data lines are similar to digital data. The USB transceiver 210 may be implemented using a transceiver which is well-known in the art.

A non-transitory computer-readable medium stores a program to execute processing for decoding USB data. The USB data is communicated over a universal serial bus (USB) and input to a pair of data input terminals, and a system clock is put to the clock input terminal. The processing comprises generating synchronized data and a device clock based on a system clock by a clock processor 302; providing the synchronized data to an event generator 304; providing control information to the event generator, wherein the control information is generated by a control circuity 322; providing a present state stored by a state logic circuitry 306 to the event generator; providing a plurality of predetermined events to a plurality of registers of the event generator; triggering respective ones of the predetermined events is in response to respective combinations of values of the synchronized data, the device clock, the control information and the present state. A one of the predetermined events comprises identifying a stuffed-bit in the synchronized data, another of the predetermined events comprises stripping the identified stuffed-bit from the synchronized data and not toggling output clock, a combination of the predetermined events comprises decoding stuffed-bit stripped synchronized data, and a further of the predetermined events comprises outputting, at the output terminals, decoded stuffed-bit stripped synchronized data and toggling the output clock. In some embodiments, a clock rate of the device clock is no more than 12 times of the data transferring rate over the USB.

In some embodiments, the processing provides control information to the event generator includes at least one of selecting a rising edge of the synchronized data as an ingredient of the event, and selecting a falling edge of the synchronized data as an ingredient of the event.

In some embodiments, the processing provides control information includes generating count values at counters; loading match values to match registers; and comparing the count values from the counters with the values stored in the match registers to produce a match result.

In some embodiments, the processing generates count values includes generating two counter values that represent a unified 32-bit count values or two separate 16-bit count values.

In some embodiments, the processing further comprises generating an interrupt signal in response to a predetermined event signal from the event generator.

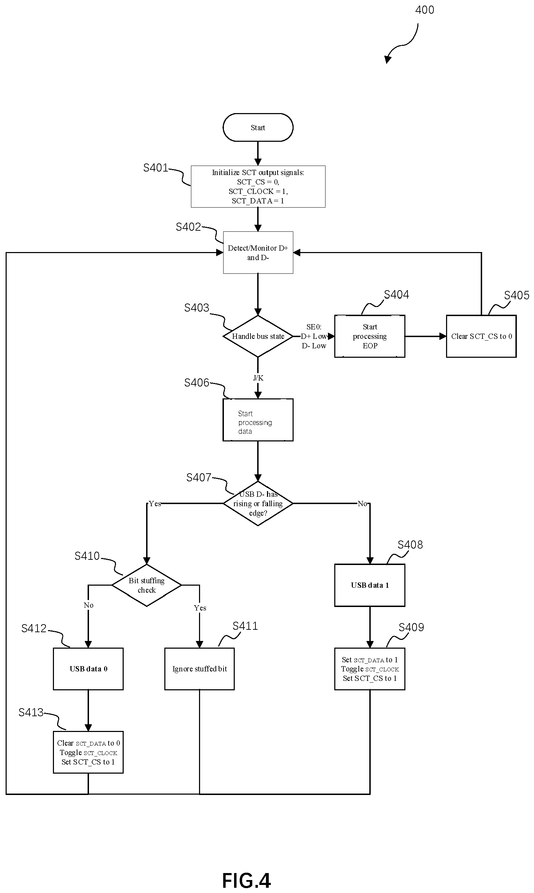

FIG. 4 illustrates a flow chart 400 of the operation of a device 208 adapted to implement a state machine in accordance with an embodiment of the present application. The device 208 receives the data on the USB data lines and processes the data by using predetermined states and events of the state machine. The device 208 processes the data may comprise: handling bus state; checking the data on any of the USB data lines; detecting stuffed-bit, raw data 1 and raw data 0. The device 208 may output indication signals, raw data signals and clock signals. The device 208 may output data 1 when the data on the data line D- or D+ does not have rising edge or falling edge. And the device may check if the data is a stuffed-bit when the data on the data line D- or D+ has a rising edge or a falling edge, and the device outputs data 0 if the data is not a stuffed-bit, or the device ignores the stuffed-bit if the stuffed-bit is detected.

In some embodiments, the operation of device 208 decode the data with NRZI encoding may include the following steps.

S401 is a step for initializing output signals of the device 208. For example, the indication signal SCT_CS is set to zero. Both of the clock signal SCT_CLOCK and the raw data signal SCT_DATA are set to one.

S402 is a step for detecting or decoding the data received on the USB data lines D+ and D-. If a data packet has been supplied to the device, the operation goes to S403.

S403 is a step for handling the bus state. If the bus state of the data signal lines is on an "SE0" state which means both of the data signal line D+ and the data signal line D- are at low level and the bus state of the USB is an end of package (EOP), then goes to S404. If the bus state is not an EOP, the operation goes to S406.

S404 is a step for processing the end of packet (EOP). After processing the EOP, goes to S405.

S405 is a step for setting the indication signal output by device 208 to zero. The operation returns to S402.

S406 is a step for processing data on the USB data lines. And the operation goes to S407.

S407 is a step for checking whether USB D- has rising or falling edge. If the USB D-does not have rising or falling edge, the operation goes to S408. If the USB D- has rising or falling edge, the operation goes to S410. In some embodiments, the step S407 may also be used for judging whether USB D+ has rising or falling edge.

S408 is a step for telling the data on the USB data lines is not changed and the raw data is one. The operation goes to S409.

S409 is a step for setting the raw data signal SCT_DATA to one, toggling the clock signal SCT_CLOCK and setting the indication signal SCT_CS to one.

S410 is a step for checking whether a bit stuffing is inserted or not. If six ones have been received consecutively, the next data zero will be treated as a stuffed-bit and the operation goes to S411. Otherwise, the operation goes to S412.

S411 is a step for ignoring the stuffed-bit. And the operation returns to S402.

S412 is a step for telling the data zero received as the raw data zero. The operation goes to S413.

S413 is for setting the raw data signal SCT_DATA to zero, toggling the clock signal SCT_CLOCK and setting the indication signal SCT_CS to one. And the operation returns to S402.

The device 208 operates in this manner, making it possible to decoding the data with NRZI encoding on the USB and detecting the stuffed-bit and realizing clock synchronization.

The device 208 may be adapted to implement a low state machine ("L State Machine") part and a high state machine ("H State Machine") part. Both the low state machine and the high state machine are implemented with hardware. FIG. 5A and FIG. 5B illustrate a low state machine part and FIG. 6 illustrates a high state machine part respectively in accordance with an embodiment of the present application. In some embodiments, the state machine may only comprise one part to decode the data and detect the stuffed-bit. It might not be split into a high state machine part and a low state machine part.

The clock source of state machine may be at 144MHz and the USB data communication may be under full speed mode with the data transferring rate over the USB of 12Mbps. The low state machine part may include first counter ("L counter") and the high state machine part may include second counter ("H counter"). The first counter may be known as using the first half bits of a 32-bit counter. The higher counter may be known as using the second half bits of the 32-bit counter.

Some of the predetermined events comprises stripping the identified stuffed-bit from the synchronized data and not toggling output clock, to provide stuff-bit stripped synchronized data. As shown in FIG. 5A, event 0 502, event1, 504, event 3 508, event 4 510, event 5 512, event 7 516 etc. are used to decode data "0" when the data on the data line D- has one of the rising edge and falling edge. As shown in FIG. 5B, event 9 520 is used to decode data "1" when no rising edge or falling edge is detected. Some of the predetermined events comprises identifying a stuffed-bit in the synchronized data, such as event 10 522 and event 11 524.

The state logic circuitry 306 in FIG. 3 is configured to store a present state, being a one of the predetermined states. The predetermined states comprise state 0 532, state 1 534, state 2 536, state 3 538, state 4 540, state 5, 542, state 6, 544, state 10 552, state 11 554 as shown in FIG. 5A, FIG. 5B and FIG. 6.

The event generator 304 in FIG. 3 is configured to trigger respective ones of the predetermined events, in response to respective combinations of values of the synchronized data, the device clock, the control information and the present state.

A combination of the predetermined events comprises decoding the stuffed-bit stripped synchronized data, to provide decoded stuffed-bit stripped synchronized data.

A further of the predetermined events comprises outputting, at the output terminals, the decoded stuffed-bit stripped synchronized data and toggling the output clock.

Some of the predetermined events comprising detecting the end of the package. As shown in FIG. 6, event 12 526, event 13 528, event 14 530 and event 15 556 are used to detect the end of the package ("EOP").

In this way, the device 208 is configurated to comprise two state machine parts (L State Machine part and High State Machine part) to process the USB signal with predetermined states and events. The Low state machine part is for processing USB data streams. The high state machine part is for detecting USB EOP. In other embodiments, the "H State Machine" part may be used for processing USB data streams. And the "L State Machine" part may be used for detecting USB EOP.

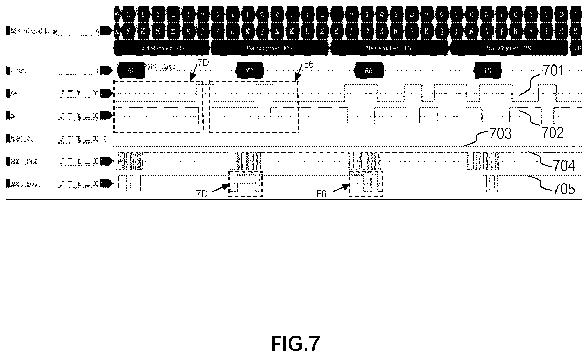

FIG. 7 illustrates the signals captured by using a logic analyzer. Referring to FIG. 7, the waveform 701 shows the synchronized data carried by the data line D+ and the waveform 702 shows the synchronized data carried by the data line D-. The line 703 shows the SPI indication signal (HSPI_CS) output through the SPI interface. The waveforms 704 and 705 show the clock signal (HSPI CLK) and the stuffed-bit stripped synchronized data (HSPI_MOSI) output through the SPI interface respectively. As shown in FIG. 7, there is a time delay between the stuffed-bit stripped synchronized data output through the SPI interface at 705 and the data carried by the USB data line D+ at 701 and the USB data line D- at 702. Take one databyte "E6" for example, when the device 208 of FIG. 2 receives a synchronized data "E6" from the data line D+ as shown at 701 and the data line D- as shown at 702, the device 208 outputs the decoded stuffed-bit stripped synchronized data and toggling the output clock at the output terminals. The co-processor 212 received the decoded stuffed-bit stripped synchronized data, the output clock and the indication signal output from the device 208 and converts them to corresponding signals compliant with the SPI specification. The stuffed-bit stripped synchronized data "E6" output through the SPI interface as shown at 705 are captured when the clock signal (HSPI CLK) output through the SPI interface toggles. In this way, the present application may convert complex USB synchronized data into simple SPI signals.

Referring now to the use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the application as claimed.

Preferred embodiments are described herein, including the best mode known to the inventor for carrying out the claimed subject matter. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A device adapted to implement a state machine which defines a plurality of predetermined states and a plurality of predetermined events, for decoding USB data communicated over a universal serial bus (USB), the device comprising:
a pair of data input terminals for receiving the USB data, and a clock input terminal for receiving a system clock;
a clock processor (302) coupled to the pair of data input terminals and the clock input terminal, and configured to output, based on the system clock, synchronized data and a device clock;
an event generator (304) coupled to the clock processor to receive the synchronized data and the device clock;
state logic circuitry (306) coupled to an output of the event generator;
output terminals (308), coupled to the event generator and comprising a decoded-data output terminal and a clock output terminal; and
control circuity (322) coupled to the event generator and for providing control information to the event generator;
wherein the state logic circuitry (306) is configured to store a present state, being one of the predetermined states;
wherein the event generator is configured to trigger respective ones of the predetermined events, in response to respective combinations of values of the synchronized data, the device clock, the control information and the present state;
wherein:
a one of the predetermined events comprises identifying a stuffed-bit in the synchronized data,
another of the predetermined events comprises stripping the identified stuffed-bit from the synchronized data and not toggling output clock, to provide stuff-bit stripped synchronized data,
a combination of the predetermined events comprises decoding the stuffed-bit stripped synchronized data, to provide decoded stuffed-bit stripped synchronized data,
and a further of the predetermined events comprises outputting, at the output terminals, the decoded stuffed-bit stripped synchronized data and toggling the output clock.

2. The device according to claim 1, wherein a clock rate of the SCT clock is at least 6 times the data transferring rate over the USB.

3. The device according to any preceding claim, wherein a clock rate of the SCT clock is no more than 12 times of the data transferring rate over the USB.

4. The device according to any preceding claim, further comprising an indicator output terminal configured to output an indication signal indicative that the bus state of the USB is an end of package(EOP) or not.

5. The device according to any preceding claim, wherein the control circuity (322) further comprises a counter unit (312) including first and second counters that are configurable to operate as a unified 32-bit counter or as two separate 16-bit counters.

6. The device according to claim 5, wherein the control circuity (322) further comprises a control logic circuitry (320) connected to the counter unit to provide control signals for the counters of the counter unit (312), wherein the control logic circuitry (320) is also connected to the event generator (304) to receive event signals therefrom, and wherein the control logic circuit is configured to use the control signals to reset the counter after an event is triggered by the event generator (304).

7. The device according to claim 5 or 6, wherein the control circuity (322) further comprises a match register (316) configured to load expected match value.

8. The device according to any of claims 5 to 7, wherein the control circuity (322) further comprises a match logic module (318) configured to generate a match logic in response to the count values from the counter unit being equal to the match values from the match register, and wherein the one of the predetermined events is triggered only when the match logic is generated.

9. The device according to any preceding claim, further comprising an interrupt module (310) connected to the event generator (304), wherein the interrupt module (310) is configured to generate an interrupt signal in response to receiving a predetermined one of the event signals from the event generator.

## Patentansprüche

1. Vorrichtung, die angepasst ist, um eine Zustandsmaschine zu implementieren, die eine Mehrzahl von vorbestimmten Zuständen und eine Mehrzahl von vorbestimmten Ereignissen zum Decodieren von USB-Daten definiert, die über einen universellen seriellen Bus (USB) kommuniziert werden, wobei die Vorrichtung umfasst:
ein Paar von Dateneingangsanschlüssen zum Empfangen der USB-Daten und einen Takteingangsanschluss zum Empfangen eines Systemtaktes;
einen Taktprozessor (302), der mit dem Paar von Dateneingangsanschlüssen und dem Takteingangsanschluss gekoppelt ist und dazu konfiguriert ist, basierend auf dem Systemtakt synchronisierte Daten und einen Vorrichtungstakt auszugeben;
einen Ereignisgenerator (304), der mit dem Taktprozessor gekoppelt ist, um die synchronisierten Daten und den Vorrichtungstakt zu empfangen;
eine Zustandslogikschaltung (306), die mit einem Ausgang des Ereignisgenerators gekoppelt ist;
Ausgangsanschlüsse (308), die mit dem Ereignisgenerator gekoppelt sind und einen decodierten Datenausgangsanschluss und einen Taktausgangsanschluss umfassen; und
einen Steuerschaltkreis (322), der mit dem Ereignisgenerator und zum Breitstellen von Steuerinformation an den Ereignisgenerator gekoppelt ist;
wobei der Zustandslogikschaltkreis (306) dazu konfiguriert ist, einen aktuellen Zustand zu speichern, der einer der vorbestimmten Zustände ist;
wobei der Ereignisgenerator dazu konfiguriert ist, jeweilige der vorbestimmten Ereignisse als Reaktion auf jeweilige Kombinationen von Werten der synchronisierten Daten, des Vorrichtungstakts, der Steuerinformationen und des aktuellen Zustands auszulösen;
wobei:
eines der vorbestimmten Ereignisse das Identifizieren eines Stuffed-Bits in den synchronisierten Daten umfasst, ein anderes der vorbestimmten Ereignisse das Strippen des identifizierten Stuffed-Bits aus den synchronisierten Daten und das Nichtumschalten des Ausgangstakts umfasst, um Stuffed-Bit-gestrippte synchronisierte Daten bereitzustellen,
eine Kombination der vorbestimmten Ereignisse das Decodieren der Stuffed-Bit-gestrippten synchronisierten Daten umfasst, um decodierte Stuffed-Bit-gestrippte synchronisierte Daten bereitzustellen,
und ein weiteres der vorbestimmten Ereignisse das Ausgeben, an den Ausgangsanschlüssen, der decodierten, Stuffed-Bit-gestrippten, synchronisierten Daten und das Umschalten des Ausgangstaktes umfasst.

2. Vorrichtung nach Anspruch 1, wobei eine Taktrate des SCT-Taktes zumindest das 6-fache der Datenübertragungsrate über USB beträgt.

3. Vorrichtung nach einem der vorhergehenden Ansprüche, wobei eine Taktrate des SCT-Taktes nicht mehr als das 12-fache der Datenübertragungsrate über USB beträgt.

4. Vorrichtung nach einem der vorhergehenden Ansprüche, die ferner einen Indikator-Ausgangsanschluss umfasst, der dazu konfiguriert ist, ein Anzeigesignal auszugeben, das kennzeichnend dafür ist, dass der Buszustand des USB ein Ende des Pakets (EOP) ist oder nicht.

5. Vorrichtung nach einem der vorhergehenden Ansprüche, wobei der Steuerschaltkreis (322) ferner eine Zählereinheit (312) umfasst, die einen ersten und einen zweiten Zähler beinhaltet, die konfigurierbar sind, um als einheitlicher 32-Bit-Zähler oder als zwei getrennte 16-Bit-Zähler zu arbeiten.

6. Vorrichtung nach Anspruch 5, wobei der Steuerschaltkreis (322) ferner einen Steuerlogikschaltkreis (320) umfasst, der mit der Zählereinheit verbunden ist, um Steuersignale für die Zähler der Zählereinheit (312) bereitzustellen, wobei der Steuerlogikschaltkreis (320) auch mit dem Ereignisgenerator (304) verbunden ist, um von diesem Ereignissignale zu empfangen, und wobei der Steuerlogikschaltkreis dazu konfiguriert ist, die Steuersignale zu verwenden, um den Zähler zurückzusetzen, nachdem ein Ereignis durch den Ereignisgenerator (304) ausgelöst wurde.

7. Vorrichtung nach Anspruch 5 oder 6, wobei der Steuerschaltkreis (322) ferner ein Abgleichregister (316) umfasst, das dazu konfiguriert ist, einen erwarteten Abgleichwert zu laden.

8. Vorrichtung nach einem der Ansprüche 5 bis 7, wobei der Steuerschaltkreis (322) ferner ein Abgleichlogikmodul (318) umfasst, das dazu konfiguriert ist, eine Abgleichlogik als Reaktion darauf zu erzeugen, dass die Zählwerte aus der Zählereinheit gleich den Abgleichwerten aus dem Abgleichregister sind, und wobei das eine der vorbestimmten Ereignisse nur ausgelöst wird, wenn die Abgleichlogik erzeugt wird.

9. Vorrichtung nach einem der vorhergehenden Ansprüche, die ferner ein Unterbrechungsmodul (310) umfasst, das mit dem Ereignisgenerator (304) verbunden ist, wobei das Unterbrechungsmodul (310) dazu konfiguriert ist, ein Unterbrechungssignal als Reaktion auf das Empfangen eines vorbestimmten der Ereignissignale von dem Ereignisgenerator zu erzeugen.

## Revendications

1. Dispositif adapté pour implémenter un automate fini qui définit une pluralité d'états prédéterminés et une pluralité d'événements prédéterminés, afin de décoder des données USB communiquées sur un bus série universel (USB), le dispositif comprenant :
une paire de bornes d'entrée de données destinées à recevoir les données USB, et une borne d'entrée d'horloge destinée à recevoir une horloge système ;
un processeur d'horloge (302) couplé à la paire de bornes d'entrée de données et à la borne d'entrée d'horloge, et configuré pour délivrer, en fonction de l'horloge système, des données synchronisées et une horloge de dispositif ;
un générateur d'événements (304) couplé au processeur d'horloge pour recevoir les données synchronisées et l'horloge de dispositif ;
des circuits logiques d'état (306) couplés à une sortie du générateur d'événements ;
des bornes de sortie (308), couplées au générateur d'événements et comprenant une borne de sortie de données décodées et une borne de sortie d'horloge ; et
des circuits de commande (322) couplés au générateur d'événements et destinés à fournir des informations de commande au générateur d'événements ;
dans lequel les circuits logiques d'état (306) sont configurés pour stocker un état actuel, celui-ci étant l'un des états prédéterminés ;
dans lequel le générateur d'événements est configuré pour déclencher des événements respectifs des événements prédéterminés, en réponse à des combinaisons respectives de valeurs des données synchronisées, de l'horloge de dispositif, des informations de commande et de l'état actuel ;
dans lequel :
l'un des événements prédéterminés comprend l'identification d'un bit de remplissage dans les données synchronisées,
un autre des événements prédéterminés comprend l'extraction du bit de remplissage identifié des données synchronisées et le non-basculement de l'horloge de sortie, afin de fournir des données synchronisées dépourvues de bit de remplissage,
une combinaison des événements prédéterminés comprend le décodage des données synchronisées dépourvues de bit de remplissage, pour fournir des données synchronisées dépourvues de bit de remplissage décodées,
et encore un autre des événements prédéterminés comprend la délivrance, au niveau des bornes de sortie, des données synchronisées dépourvues de bit de remplissage décodées et le basculement de l'horloge de sortie.

2. Dispositif selon la revendication 1, dans lequel une cadence d'horloge de l'horloge SCT est au moins 6 fois le débit de transfert de données sur l'USB.

3. Dispositif selon n'importe quelle revendication précédente, dans lequel une cadence d'horloge de l'horloge SCT n'est pas plus de 12 fois le débit de transfert de données sur l'USB.

4. Dispositif selon n'importe quelle revendication précédente, comprenant en outre une borne de sortie d'indicateur configurée pour délivrer un signal d'indication indiquant que l'état de bus de l'USB est une fin de paquets (EOP) ou non.

5. Dispositif selon n'importe quelle revendication précédente, dans lequel les circuits de commande (322) comprennent en outre une unité de compteur (312) comportant des premier et second compteurs qui sont configurables pour fonctionner en tant que compteur de 32 bits unifié ou en tant que deux compteurs de 16 bits séparés.

6. Dispositif selon la revendication 5, dans lequel les circuits de commande (322) comprennent en outre des circuits logiques de commande (320) connectés à l'unité de compteur pour fournir des signaux de commande aux compteurs de l'unité de compteur (312), dans lequel les circuits logiques de commande (320) sont également connectés au générateur d'événements (304) pour recevoir de celui-ci des signaux d'événements, et dans lequel le circuit logique de commande est configuré pour utiliser les signaux de commande afin de réinitialiser le compteur après le déclenchement d'un événement par le générateur d'événements (304).

7. Dispositif selon la revendication 5 ou 6, dans lequel les circuits de commande (322) comprennent en outre un registre de concordance (316) configuré pour charger une valeur de concordance attendue.

8. Dispositif selon l'une quelconque des revendications 5 à 7, dans lequel les circuits de commande (322) comprennent en outre un module logique de concordance (318) configuré pour générer une logique de concordance lorsque les valeurs de compte provenant de l'unité de compteur sont égales aux valeurs de concordance provenant du registre de concordance, et dans lequel l'un des événements prédéterminés est déclenché uniquement lorsque la logique de concordance est générée.

9. Dispositif selon n'importe quelle revendication précédente, comprenant en outre un module d'interruption (310) connecté au générateur d'événements (304), dans lequel le module d'interruption (310) est configuré pour générer un signal d'interruption en réponse à la réception d'un signal prédéterminé des signaux d'événements provenant du générateur d'événements.
